# EUROPÄISCHE PATENTSCHRIFT

(11) **EP 1 066 190 B1**
(45) Veröffentlichungstag und Bekanntmachung des Hinweises auf die Patenterteilung: **02.01.2002**
(21) Anmeldenummer: 99907629.2
(22) Anmeldetag: 12.03.1999
(51) Int. Cl.: B62D 29/00

(54) **FLÄCHIGER VERBUNDKÖRPER, INSBESONDERE KRAFTFAHRZEUG-KAROSSERIEELEMENT**
FLAT COMPOSITE BODY, ESPECIALLY A MOTOR VEHICLE BODY ELEMENT
CORPS COMPOSITE PLAT, NOTAMMENT ELEMENT DE CARROSSERIE DE VEHICULE A MOTEUR

(30) Priorität: 27.03.1998 DE 19813592
(43) Veröffentlichungstag der Anmeldung: 10.01.2001
(73) Patentinhaber: AUDI AG, 85045 Ingolstadt (DE); Vantico AG, 4057 Basel (CH)
(72) Erfinder: STEIDL, Matthias, D-85049 Ingolstadt (DE); BAUER, Karl, D-86316 Friedberg (DE)
(74) Vertreter: Geissler, Manfred
(86) Internationale Anmeldenummer: EP9901648
(87) Internationale Veröffentlichungsnummer: WO9950126

(56) Entgegenhaltungen:
- WO-A-83/00840
- DE-A- 3 939 534
- DE-A- 4 232 953
- DE-A- 4 439 827
- M. UEBELSTÄDT: "Überlegungen zum Grossserieneinsatz von Sandwichbauteilen, deren Auslegung und Gestaltung am Beispiel der Motorhaube des AUDI-Forschungsautos -- 10. Statusseminar "Kraftfahrzeuge und Srassenverkehr" des BMFT - Entwicklungslinien für Kraftfahrzeuge und Kraftstoffe - Forschungsbilanz 1982" 9. Februar 1983 , VERLAG TÜV RHEINLAND GMBH , KÖLN XP002105892 in der Anmeldung erwähnt siehe Seite 171, Absatz 5 - Seite 172; Abbildungen 5-7

## Beschreibung

Die Erfindung bezieht sich auf einen flächigen Verbundkörper als Kraftfahrzeug-Karosserieelement, mit einem asymmetrischen Schichtaufbau, bestehend aus einer ersten, äußeren Schicht aus einem Aluminium-Werkstoff, einem Stahlblech oder einem Sintermetall, weiter bestehend aus einer Zwischenschicht, insbesondere einem Schaumstoffkem, und aus einer zweiten, inneren Schicht aus einem nichtmetallischen Werkstoff.
Die Erfindung bezieht sich des weiteren auf ein Verfahren zur Herstellung eines solchen flächigen Verbundkörpers.

Ein gattungsgemäßer Verbundkörper bzw. ein Verfahren zur Herstellung eines solchen ist durch den Aufsatz "Überlegungen zum Großserieneinsatz von Sandwichbauteilen, deren Auslegung und Gestaltung am Beispiel der Motorhaube des AUDI-Forschungsautos" aus der Schriftenreihe Statusberichte des BMFT - Entwicklungslinien für Kraftfahrzeuge und Kraftstoffe - Forschungsbilanz 1982, Seiten 167 bis 177, Verlag TÜV Rheinland, bekannt geworden. Der Aufsatz befaßt sich mit dem Leichtbau in Sandwichaufbau am Beispiel einer Kfz-Motorhaube. Auslegungs-, Gestaltungs- und Fertigungsüberlegungen zeigen dabei die Möglichkeiten und Grenzen dieses Leichtbauprinzips auf. Auf den Seiten 171 und 172 sind bezüglich des Schichtaufbaues verschiedene Ausführungsbeispiele gezeigt. Bei einem der Ausführungsbeispiele bestehen die Deckschichten aus Aluminium bzw. beschichtetem Blech und aus Kunststoff. Damit ergibt sich ein asymmetrischer Schichtaufbau. Der Kern besteht bevorzugt aus Structhan (thermoreaktiver, geschäumter, glasfaserverstärkter Kunststoff mit variablem Raumgewicht). Der Werkstoff - Structhan - übernimmt dabei die Funktion des Spannungsausgleiches (Vorbeugen gegen Verzug).

Die DE 39 39 534 C2 beschreibt ein Verfahren und eine Stützform zur Herstellung von Platten und plattenartigen Gegenständen, wie Türen, insbesondere Kühlschranktüren. Auch hier ist ein asymmetrischer Schichtenaufbau realisiert, nämlich durch eine Metallblechdeckschicht auf der einen Seite und eine Kunststoff-Foliendeckschicht auf der anderen Seite und einen dazwischen liegenden, aus einem flüssigem Reaktionsgemisch in - situ geschäumten Hartschaumstoffkern. Der Verformungsgefahr aufgrund unterschiedlicher Wärmeausdehnungskoeffizienten wird dadurch zu begegnen versucht, daß die Metallblechdeckschicht undloder die Kunststoff Fofiendeckschicht vor dem Ausschäumen einer die beim Abkühlen auftretende Verformung kompensierenden und ihr entgegen gerichteten Vorverformung unterworfen wird. Der auftretende Verzug ist nicht berechenbar und muß empirisch ermittelt werden.

Der Vollständigkeit halber sei noch auf die WO 83/00840 A verwiesen, die einen Verbundkörper, insbesondere eine Verbundplatte zum Aufbau von Bootswandungen, Containerwandungen oder dergleichen mit einer beidseitigen starren Außenhaut, einem ein- oder mehrteiligen Schaumstoff-Füllkörper und faserverstärkten Zwischenschichten aus Glasfasern oder dergleichen zwischen jeder Außenhaut und Füllkörper, sowie ausgehärtetem Kunststoff zur Verbindung der gesamten Anordnung beschreibt Dabei ist ein symmetrischer Aufbau gegeben, wobei jede Außenhaut aus einem Material mit einer Druckfestigkeit von wenigstens etwa Rein-Aluminium besteht.

Davon ausgehend liegt der Erfindung die Aufgabe zugrunde, einen flächigen Verbundkörper als Kraftfahrzeug-Karosserieelement mit einem asymmetrischen Schichtaufbau bereitzustellen, der bei geringem Gewicht eine hohe Dimensionsstabilität und eine hohe Steifigkeit aufweist sowie eine gute Lackierfähigkeit besitzt.

Die erfindungsgemäße Lösung ist in einem asymmetrisch aufgebauten flächigen Verbundkörper zu sehen, der die Merkmale des Patentanspruches 1 aufweist. Ein besonders geeignetes Verfahren zu dessen Herstellung gibt Patentanspruch 6 wieder. Vorteilhafte Ausgestaltungen und Weiterbildungen der Erfindung sind mit den jeweiligen Unteransprüchen beansprucht.

Die Erfindung ist anhand eines Ausführungsbeispieles für einen solchen asymmetrischen flächigen Verbundkörper näher erläutert, ein besonders geeigneter Anwendungsfall ist dabei ein selbsttragendes Personenkraftfahrzeug-Karosserieteil, wie beispielsweise ein Hardtop.

In der Zeichnung zeigen
- **Fig. 1**: ein Personenkraftfahrzeug ohne Hardtop,
- **Fig. 2**: das gleiche Kraftfahrzeug mit aufgesetztem Hardtop,
- **Fig. 3**: das Hardtop allein und
- **Fig. 4**: eine abschnittsweise Schnittdarstellung des Hardtops, gemäß Pfeile IV in Fig. 3.

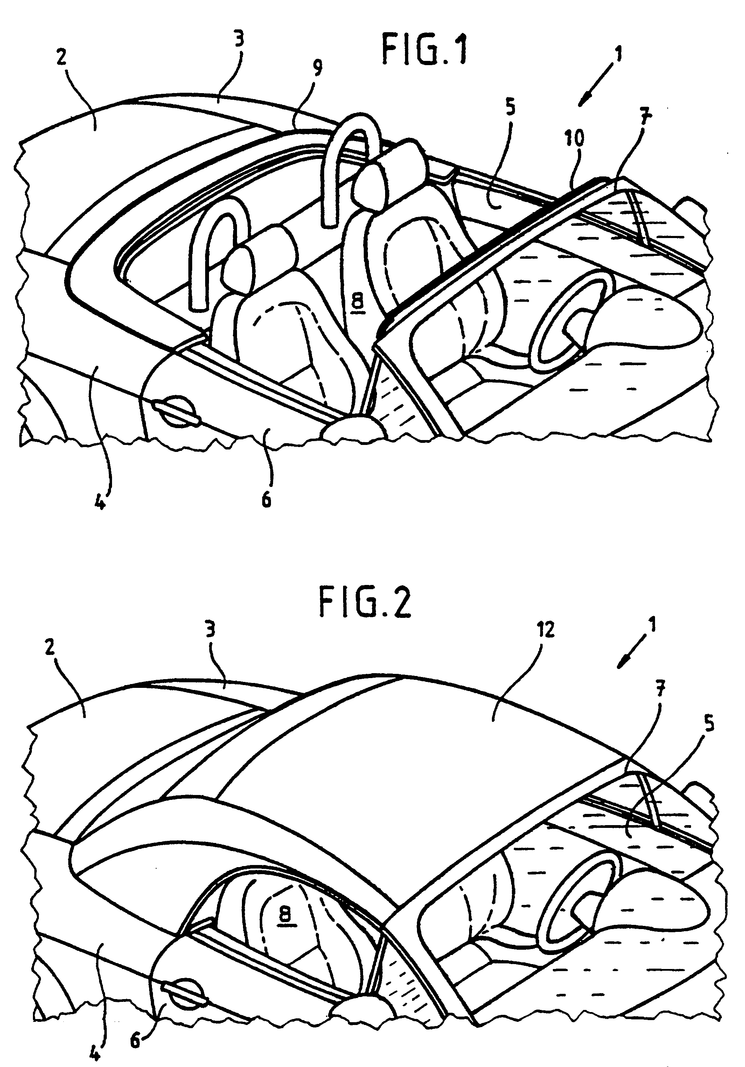

Fig. 1 zeigt ausschnittsweise ein Personenkraftfahrzeug 1 mit Heckklappe 2, linkem und rechtem hinteren Kotflügel 3, 4 linker und rechter Fahrzeugtür 5, 6 und Rahmen 7 für eine Windschutzscheibe. Ein Fahrgastraum 8 ist nach oben offen, entsprechend einem Cabriolet.

An dem Fahrgastraum 8 zugewandten Kanten der Heckklappe 2 und der hinteren Kotflügel 3, 4 ist ein umlaufender Aufnahme- und Befestigungsmechanismus 9 vorhanden. Ein entsprechender Aufnahme- und Befestigungsmechanismus 10 verläuft entlang des oberen, horizontal gerichteten Abschnittes des Rahmens 7. Beide Aufnahme- und Befestigungsmechanismen 9, 10 dienen der Aufnahme eines Hardtops 12, wie dies in Fig. 2 dargestellt ist, so daß nunmehr der Fahrgastraum 8 nach oben hin geschlossen werden kann. Das Hardtop 12 ist also je nach Bedarf montierbar bzw. demontierbar, so daß das Personenkraftfahrzeug 1 wahlweise mit entsprechender Ausstattung gefahren werden kann.

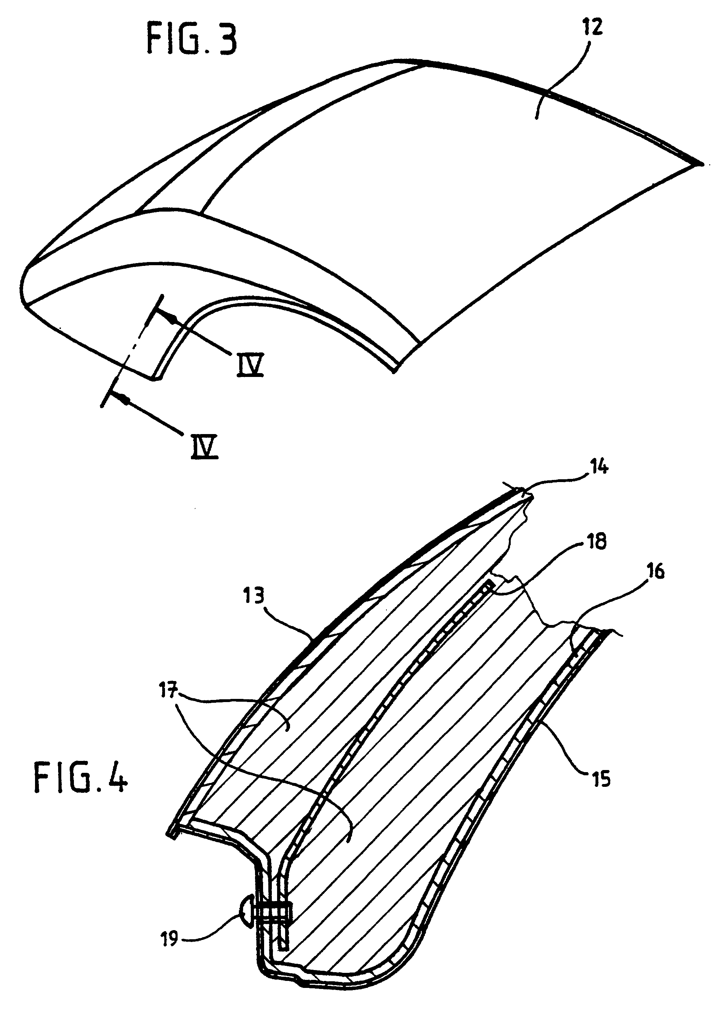

Fig. 3 zeigt der Übersichtlichkeit halber das Hardtop 12 nochmals in einer separaten Darstellung, während der Schichtenaufbau dieses asymmetrischen flächigen Verbundkörpers aus Fig. 4 hervorgeht. Dabei wird die äußere Schicht 13 von einer vorgeformten Platine aus einem Aluminiumwerkstoff gebildet, wobei hier auch z. B. ein Stahlblech oder ein Sintermetall zur Anwendung kommen könnte. An diese äußere Schicht 13 schließt sich ein mit einem expandierenden Epoxidharz-Bindemittel versehenes Polyestervlies 14 an. Eine fahrgastraumseitige, innere Schicht 15 wird von einem Dekorstoff gebildet, an den sich eine wiederum mit expandierendem Epoxidharz-Bindemittel versehene Fasermatte 16 anschließt. Der Hohlraum ist von einem Polyurethan (PU) - Schaumkem 17 ausgefüllt, denkbar wären auch ein EPS-Schaumkern, andere Leichtschäume (Polypropylen usw.) oder ein Kern aus geblähtem Glas mit Bindemittel. An geeigneten Stellen innerhalb des Hohlraumes können Einlagen 18, beispielsweise ebenfalls aus einem Aluminiumwerkstoff, vorgesehen sein, die z. B. mittels Schraubverbindung 19 mit der äußeren bzw. inneren Schicht 13, 15 verbunden sein können.

Der flächige Verbundkörper - Hardtop 12 gemäß Ausführungsbeispiel - besteht sonach bevorzugt aus einer metallischen Oberfläche, einem Polyestervlies, welches durchaus ein handelsübliches Produkt, wie beispielsweise in Küchen-Dunstfiltern verwendet, sein kann, einem Schaumkern mittlerer Dichte (ca. 20 kg/m³ bis ca. 100 kg/m³), einer Fasermatte (Glas-Wirrgelege mit vorzugsweise für Epoxidharze geeignetem Finish, ggf. enthaltend einen thermoplastischen Binder zur thermischen Verformung) und aus einer dekorativen Mehrschichtfolie, vorzugsweise mit PUR-Sperrschicht. Als Dekorfolie eignen sich insbesondere thermoplastische Folien mit einer integrierten Sperrschicht (soll beim Verpressen einen Schaumdurchschlag verhindern), aber auch Naturprodukte, wie z. B. Leder, wenn es ohne durchzuschlagen einem Schäumdruck von ca. 1,5 bar standhält. Polyestervlies und Stapelfasermatte sind darüber hinaus durch expandierendes Epoxidharz benetzt.

Im einzelnen ist folgender Schichtaufbau gegeben:
Aluminium-Blech (alkalisch entfettet); Blechdicke 1,1 mm
Polyestervlies 300 g/m², Viledon 15/500 S
PU-Schaumkern mit RG ca. 54 kg/m³ (RG=Raumgewicht), Kapex (Fa. Airex/CH)
Glasschnittfasermatte: 450 g/m²
Polyurethan-Dekorstoff: 70 µm - Sperrfolie,
wobei ein als Bindemittel dienende expandierende Matrixsystem mit einer Reaktionsharzmasse (Gesamtmenge aus Harz + Härter + Treibmittel) von 1600 g/m² (außen) und ca. 1300 g/m² (innen) darüber hinaus wie folgt bestimmt ist:
Harz Araldit® LY 5054 (Firma Ciba Spezialitätenchemie AG, Basel) + 1 % Treibmittel
Härter XB 5003-1® (Firma Ciba Spezialitätenchemie AG, Basel)
Treibmittel DY 5054® (Firma Ciba Spezialitätenchemie AG, Basel)
Mischungsverhältnis: 100 : 20 Gew. -Teile
wobei die Reaktionsharzmasse expandiert werden kann und der entstehende Schaum nicht kollabiert unter Einsatz des
Trennmittels auf Basis von PAT® 921/A der
Fa. Würtz

Als Bindemittel dienendes expandiertes Matrixsystem sind im Prinzip alle flüssigen Epoxidharz-Systeme geeignet, welche mit einem Härter/Härtergemisch reagieren können. Bevorzugt hierfür sind Bisphenol-Epoxyharze, z. B. Bisphenol-A und Bisphenol-A/F Epoxide, modifiziert mit Stabilisatoren und Thixotropier-Mitteln. Auch geeignet sind ferner Glycidylether von aliphatischen Alkoholen oder Polyalkylenglykolen, weiter auch feste Epoxidharze, welche in Abmischung mit einem flüssigen Epoxidharz sich flüssig verarbeiten lassen, wobei als feste Epoxidharze z. B. Bisphenol-A-Epoxidharze eingesetzt werden können.

Als Härter können im Prinzip alle flüssigen bekannten Härter verwendet werden, z. B. aliphatische, cycloaliphatische Amine sowie deren Addukte mit z. B. Epoxiden, ferner auch Polyamidoamine. Je nach Epoxidharzsystemen können auch weitere Zusätze mitverwendet werden, die die Härtung fördern, z. B. tertiare Amine.

Das erfindungsgemäß zu verwendende Vlies dient als sogenannter Gegenzug und gleicht die durch die Asymmetrie auftretenden Spannungen aus. Das Vlies muß deshalb beim Härtungsprozeß schwinden. Beispiele von Vliessen sind thermoplastische Vliesse, wobei Vliesse aus thermoplastischen Polyestem bevorzugt sind.
Im Prinzip können alle gängigen Fasern, wie Glas, Kohle, Kevlar und Naturfasern verwendet werden.
Glasschnittfasern haben den Vorteil, daß sie gut durchgeschäumt werden können, Im Prinzip können alle Glasfasergewebe und -komplexe Verwendung finden.

Bei der Herstellung des erfindungsgemäßen Verbundkörpers (Hardtop 12) wird folgendermaßen vorgegangen:
Zunächst wird die äußere Schicht 13, also beispielsweise eine Aluminiumplatine, mittels geeignetem Tiefziehwerkzeug entsprechend der späteren Gestalt des Hardtops 12 geformt und anschließend die Randkonturen geschnitten (z. B. durch Laserschneiden). Im Anschluß daran erfährt der tiefgezogene Rohling eine alkalische Entfettung seiner Oberfläche zur Haftverbesserung. Die alkalische Entfettung besteht dabei bevorzugt aus den Schritten - Entfetten - Spülen - Beizpassivieren - Spülen - Trocknen.
Daran könnte sich neben einer Korrosionsschutz-Beschichtung, z. B. Zink-Phospatierung, noch eine Kataphorese-Grundierung, ggf. im Tauchverfahren (KTL), anschließen.

Der zwischen innerer und äußerer Schicht 13, 15 vorgesehene PU-Schaumkern 17 wird vor dem Zusammenbringen und Verbinden der einzelnen Verbundkorperschichten in einem geeigneten Werkzeug geschäumt. Der Schaumrohling wird im Anschluß daran mit Fasermatte 16 und Vlies 14 umwickelt und mit expandierendem Epoxidharz benetzt.

Zum Verbinden der einzelnen Schichten und damit Herstellen des Hardtops 12 in einem einzigen Arbeitsgang werden unter Verwendung eines geeigneten Presswerkzeuges die vorgeformte äußere Schicht 13 in die Werkzeugmatrize gelegt, die innere Schicht 15 (Dekorschicht) über den Werkzeugstempel gespannt und der Schaumkern 17 gegenüber der äußeren Schicht 13 positioniert ebenfalls in die Werkzeugmatrize eingelegt. Im Anschluß daran erfolgt durch entsprechende Stempelbewegung ein Schließen der Werkzeugform mit damit einhergehendem Verpressen der einzelnen Schichten unter gleichzeitigem Härten.

Da die Dehnungsverhältnisse der Einzelschichten aufeinander abgestimmt sind, entsteht ein dimensionsstabiler Verbundkörper. Die Formstabilität wird insbesondere bei Verwendung von Epoxidharz dadurch erreicht, daß durch Expansion kein Schwund in der flüssigen Phase auftritt, bis auf den zu vernachlässigenden Abkühlschwund. Das Schaumsystem muß bis zum Eintritt der Gelierung sein Volumen beibehalten.

Es hat sich in Versuchen als vorteilhaft erwiesen, wenn die Presswerkzeuge beim Verpressen der einzelnen Komponenten des flächigen Verbundkörpers eine Temperatur von ca. 40 bis 50° C aufweisen. Bei einer Presszeit von ca. 60 Minuten wurden gute Ergebnisse erzielt. Andere Temperaturen und Presszeiten sind denkbar. Die Presswerkzeuge sollten entsprechend einstellbar sein.

Im Ergebnis entsteht so ein flächiger Verbundkörper, der die bereits genannten Vorteile aufweist und darüber hinaus auch eine gute Lackierfähigkeit der metallischen Oberfläche (äußere Schicht 13) besitzt.

Beim Herstellprozeß ist es auch möglich, in den vom PU-Schaumkern später ausgefüllten Hohlraum Leerrohre für eine spätere Verkabelung einzubauen. Des weiteren können Befestigungselemente, wie Anschraubplatten oder Inserts mit eingesetzt werden. Die Erfindung ist auch nicht auf den im Ausführungsbeispiel aufgezeigten Anwendungsfall (Hardtop) beschränkt. Weiter denkbar ist die Verwendung auch für andere Fahrzeugteile, auch bei Schienenfahrzeugen sowie für dekorative Designelemente, sphärisch geformte Fassadenelemente, Elemente für den Messebau und ähnliches.

Das vorliegende Verfahren kann insbesondere überall da eingesetzt werden, wo eine metallische Oberfläche notwendig ist und geringes Bauteilgewicht von Vorteil ist. Beispiele sind: Maschinenbau (bewegte Massen), Bootsbau, Luftfahrzeuge, Sportgeräte, Innenausbau, Paneele, Fassaden, Möbel usw.

## Patentansprüche

1. Flächiger Verbundkörper (12) als Kraftfahrzeug-Karosserieelement, mit einem asymmetrischen Schichtaufbau, bestehend aus einer ersten, äußeren Schicht (13) aus einem Aluminium-Werkstoff, einem Stahlblech oder einem Sintermetall, weiter bestehend aus einer Zwischenschicht (17), insbesondere einem Schaumstoffkern, und aus einer zweiten, inneren Schicht (15) aus einem nicht metallischem Werkstoff, **dadurch gekennzeichnet, dass** zwischen erster, äußerer Schicht (13) und Zwischenschicht (17) ein mit Epoxidharz-Bindemittel versehenes Vlies (14) und zwischen Zwischenschicht (17) und zweiter, innerer Schicht (15) eine mit Epoxidharz-Bindemittel versehene Fasermatte (16) angeordnet sind.

2. Verbundkörper nach Anspruch 1, **gekennzeichnet durch** die Verwendung einer Aluminiumplatine als erste Schicht (13), einem Polyestervlies (14), einem Polyurethan-Schaumkern mittlerer Dichte zwischen ca. 20 kg/m³ und ca. 100 kg/m³ als Zwischenschicht (17) und weiterhin **gekennzeichnet durch** die Verwendung einer Glasschnittfasermatte (16) und einer als zweite innere Schicht (15) dienenden dekorativen Mehrschichtfolie mit Sperrschicht.

3. Verbundkörper nach Anspruch 1, **gekennzeichnet durch** folgenden Schichtaufbau:
Aluminium-Blech (13) alkalisch entfettet, ggf. noch korrosionsschutz- und KTL-beschichtet;
Blechdicke im Bereich von 1 mm;
Polyestervlies (14) 300 g/m², Viledon® 15/500 S;
Polyurethan-Schaumkern (17) Kapex® von Fa. Airex/CH, mit einem Raumgewicht von ca. 54 kg/m³;
Glasschnittfasermatte (16): 450 g/m²;
Polyurethan-Dekorstoff (15): 70 µm - Sperrfolie;
wobei ein als Bindemittel dienendes expandierendes Matrixsystem mit einer Reaktionsharzmasse von 1600 g/m² außen und ca. 1300 g/m² innen darüber hinaus wie folgt bestimmt ist:
Harz Araldit® LY 5054 von Firma Ciba Spezialitätenchemie AG, Basel + 1 % Treibmittel
Härter XB 5003-1® von Firma Ciba Spezialitätenchemie AG, Basel
Treibmittel DY 5054® von Firma Ciba Spezialitätenchemie AG, Basel
Mischungsverhältnis: 100: 20 Gew. -Teile;
wobei die Reaktionsharzmasse expandiert werden kann und der entstehende Schaum nicht kollabiert unter Einsatz des Trennmittels auf Basis von PAT® 921/A Fa. Würtz

4. Verbundkörper nach Anspruch 2 oder 3, **gekennzeichnet durch** die alternative Verwendung eines EPS- oder PP-Schaumkemes oder geblähtem Glas mit Bindemittel als Zwischenschicht (17).

5. Verbundkörper nach Anspruch 1, **dadurch gekennzeichnet, dass** in dem von der Zwischenschicht (17) ausgefüllten Hohlraum mit der äußeren oder inneren Schicht (13, 15) verbundene Einlagen (18), Leerrohre, Verstärkungen oder dergleichen angeordnet sind.

6. Verfahren zur Herstellung eines flächigen Verbundkörpers (12) als Kraftfahrzeug-Karosserieelement, mit einem asymmetrischen Schichtaufbau, bestehend aus einer ersten, äußeren Schicht (13) aus einem Aluminium-Werkstoff, einem Stahlblech oder einem Sintermetall, weiter bestehend aus einer Zwischenschicht (17), insbesondere einem Schaumstoffkern, und weiter bestehend aus einer zweiten, inneren Schicht (15) aus einem nichtmetallischem Werkstoff gemäß Patentanspruch 1, **gekennzeichnet durch** die Schritte
- Vorformen und Beschneiden der ersten Schicht (13),
- Schäumen der Zwischenschicht (17),
- Umwickeln der geschäumten Zwischenschicht (17) mit Fasermatte (16) und Vlies (14) und anschließendes Benetzen mit einem expandierenden Epoxidharz,
- Einlegen bzw. Zuordnen von erster und zweiter Schicht (13, 15) zu einer Werkzeugmatrize bzw. einem Werkzeugstempel,
- Einlegen der geschäumten Zwischenschicht (17) in die Werkzeugmaschine mit anschließendem Verpressen der einzelnen Schichten unter gleichzeitigem Härten.

7. Verfahren nach Anspruch 6, **dadurch gekennzeichnet, dass** die erste Schicht (13) nach dem Vorformen eine alkalische Entfettung ihrer Oberfläche erfährt.

8. Verfahren nach Anspruch 7, **dadurch gekennzeichnet, dass** die alkalische Entfettung aus den Schritten - Entfetten - Spülen - Beizpassivieren - Spülen - Trocknen - besteht.

9. Verfahren nach Anspruch 6, **gekennzeichnet durch** eine Temperatur beim Pressen von ca. 40 bis 50 ° C und **durch** eine Presszeit von ca. 60 Minuten.

## Claims

1. Flat composite body (12) as a motor vehicle body element, with an asymmetrical layered construction, comprising a first, outer, layer (13) of an aluminium material, steel sheet, or sintered metal, and further comprising an intermediate layer (17), in particular a foam core, and a second, inner, layer (15) of a nonmetallic material, **characterized in that** a nonwoven fabric (14) provided with epoxy resin bonding medium is arranged between the first, outer, layer (13) and the intermediate layer (17), and a fibre mat (16) provided with epoxy resin bonding medium is arranged between the intermediate layer (17) and the second, inner, layer (15).

2. Composite body according to Claim 1, **characterized by** the use of an aluminium panel as the first layer (13), a polyester nonwoven fabric (14), a polyurethane foam core of medium density between approx. 20 kg/m³ and approx. 100 kg/m³ as the intermediate layer (17) and moreover **characterized by** the use of a glass chopped strand mat (16) and a decorative multilayer foil, with barrier layer, serving as the second, inner layer (15).

3. Composite body according to Claim 1, **characterized by** the following layer construction:
Aluminium sheet (13) alkaline cleaned, and if desired corrosion-preventative and KTL coated; sheet thickness in the region of 1 mm;
Polyester nonwoven fabric (14) 300 g/m², Viledon® 15/500 S;
Polyurethane foam core (17) Kapex® of Airex Co., Switzerland, with a volume weight of approx. 54 kg/m³;
Glass chopped strand mat (16): 450 g/m²;
Polyurethane decorative material (15): 70 µm ― barrier foil;
wherein an expanding matrix system, serving as bonding medium, with a reaction resin mass of 1600 g/m² outer and approx. 1300 g/m² inner is further defined as follows:
Resin Araldite® LY 5054 of the company Ciba Spezialitätenchemie AG, Basle + 1 % expanding agent
Hardener XB 5003-1® of the company Ciba Spezialitätenchemie AG, Basle
Expanding agent DY 5054® of the company Ciba Spezialitätenchemie AG, Basle
Mixing proportions: 100:20 parts by weight;
wherein the reaction resin mass can be expanded and the resulting foam does not collapse when release agent based on Würtz Co.'s PAT® 921/A is used.

4. Composite body according to Claim 2 or Claim 3, **characterized by** the alternative use of a polystyrene or polypropylene foam core or bloated glass with bonding medium as intermediate layer (17).

5. Composite body according to Claim 1, **characterized in that** inserts (18), empty tubes, reinforcements or the like, connected to the outer or inner layer (13, 15), are arranged in the cavity filled by the intermediate layer (17).

6. Process for the manufacture of a flat composite body (12) as a motor vehicle body element, with an asymmetrical layered construction, comprising a first, outer, layer (13) of an aluminium material, steel sheet, or sintered metal, further comprising an intermediate layer (17), in particular a foam core, and further comprising a second, inner, layer (15) of a nonmetallic material, **characterized by** the steps of
- moulding and trimming the first layer (13),
- foaming the intermediate layer (17),
- wrapping the foamed intermediate layer (17) with fibre mat (16) and nonwoven fabric (14), followed by wetting with an expanding epoxy resin,
- placing first and second layers (13, 15) into/on lower and upper dies, respectively, of a press
- placing the foamed intermediate layer (17) into the press, followed by pressing of the individual layers with simultaneous hardening.

7. Process according to Claim 6, **characterized in that** the first layer (13) undergoes alkaline cleaning of its surface after the initial moulding.

8. Process according to Claim 7, **characterized in that** the alkaline cleaning comprises the steps of degreasing - rinsing - pickling - rinsing - drying.

9. Process according to Claim 6, **characterized by** a temperature during pressing of approx. 40 to 50 °C and by a pressing time of approx. 60 minutes.

## Revendications

1. Corps composite (12) plat faisant office d'élément de carrosserie pour véhicule automobile, avec une structure de couche asymétrique, constituée d'une première couche extérieure (13) réalisée en un matériau à base d'aluminium, d'une tôle d'acier ou d'un métal fritté, constituée en outre d'une couche intermédiaire (17), en particulier d'un noyau de substance alvéolaire, et d'une deuxième couche intérieure (15) constituée d'un matériau non métallique, **caractérisé en ce qu'**entre la première couche extérieure (13) et la couche intermédiaire (17) est disposé un matelas de fibres (16) garni d'un liant à base de résine époxy et entre la couche intermédiaire (17) et la deuxième couche intermédiaire (15) est disposé un matelas de fibres (16) garni d'un liant à base de résine époxy.

2. Corps composite selon la revendication 1, **caractérisé par** l'utilisation d'une platine en aluminium comme première couche (13), d'un matelas de fibres en polyester (14), d'un noyau alvéolaire en polyuréthanne de masse volumique moyenne comprise entre environ 20 kg/m³ et environ 100 kg/m³ en tant que couche intermédiaire (17) et, en outre, **caractérisé par** l'utilisation d'un matelas de fibres découpé de verre (16) et d'une feuille multicouche décorative, servant de deuxième couche intérieure (15) et ayant une couche formant barrière.

3. Corps composite selon la revendication 1, **caractérisé par** la structure de couche suivante :
tôle d'aluminium (13) dégraissée par voie alcaline, le cas échéant encore, revêtue d'un enduit de protection anticorrosion et de KTL (vernis synthétique à base de polyéthylène-téréphtalate);
épaisseur de tôle de l'ordre de 1 mm ;
matelas de polyester (14) 300 g/m², vilédon® 15/500 S ;
noyau alvéolaire polyuréthanne (17) en Kapex® de la société Airex/CH, avec une masse volumique d'environ 54 kg/m³ ;
matelas de fibres découpées de verre (16): 450 g/m²;
substance décorative à base de polyuréthanne (15): 70 µm - feuille formant barrière ;
sachant qu'un système de matrice expansible, servant de liant, avec une masse de résine réactive de 1600 g/m² extérieurement et d'environ 1300 g/m² intérieurement par-dessus, est conçu de la façon suivante :
résine alcalide LY 5054 de la société Ciba Spezialitätenchemie AG, Bâle, de +1 % d'agent porogène
durcissant XB 5003 de la société Ciba Spezialitätenchemie AG, Bâle
agent porogène DY 5054 de la société Ciba Spezialitätenchemie AG, Bâle
rapport de mélange: 100: 20 parties en poids ;
la masse de résine réactive pouvant être expansée et la mousse produite ne s'effondrant pas, en utilisant l'agent de séparation à base de PAT® 921/A FA Würtz.

4. Corps composite selon la revendication 2 ou 3, **caractérisé par** l'utilisation alternative d'un noyau de mousse en EPS ou PP ou bien de verre soufflé avec des liants en tant que couche intermédiaire (17).

5. Corps composite selon la revendication 1, **caractérisé en ce que** dans l'espace creux comblé par la couche intermédiaire (17) sont disposés des inserts (14) reliés à la couche intérieure ou extérieure (13, 15), des tubes vides, des renforcements ou analogues.

6. Procédé de fabrication d'un corps composite (12) plat faisant office d'élément de carrosserie pour véhicule automobile, avec une structure asymétrique, constituée d'une première couche extérieure (13) réalisée en un matériau à base d'aluminium, d'une tôle d'acier ou bien d'un métal fritté, constitué en outre d'une couche intermédiaire (17), en particulier d'un noyau de substance alvéolaire, et en outre constitué d'une deuxième couche intérieure (15) en un matériau non métallique selon la revendication 1, **caractérisé par** les étapes suivantes :
- préformage et découpage de la première couche extérieure (13),
- moussage de la couche intermédiaire (17),
- enroulement de la couche intermédiaire (17) moussée avec un matelas de fibres (16) et un matelas (14), et mouillage subséquent avec une résine époxy expansive,
- insertion ou association de la première et de la deuxième couche (13, 15) par rapport à une matrice d'outillage ou un poinçon d'outillage,
- insertion de la couche intermédiaire (17) moussée dans la machine-outil avec pressage subséquent des différentes couches, accompagné simultanément du durcissement.

7. Procédé selon la revendication 6, **caractérisé en ce que** la première couche (13) subit après préformage un dégraissage alcalin de sa surface.

8. Procédé selon la revendication 7, **caractérisé en ce que** le dégraissage alcalin est constitué des étapes que sont le dégraissage - rinçage - passivation - rinçage - séchage.

9. Procédé selon la revendication 6, **caractérisé par** une température au pressage d'environ 40 à 50° C et par un temps de pressage d'environ 60 minutes.
